# EUROPEAN PATENT APPLICATION

(11) **EP 4 800 062 A1**
(43) Date of publication of application: **02.09.2026**
(21) Application number: 25160921.0
(22) Date of filing: 28.02.2025
(51) Int. Cl.: C08L 23/0807, C08L 23/06

(54) **POLYETHYLENE COMPOSITION WITH IMPROVED MECHANICAL PERFORMANCE BALANCE**

(71) Applicant: Borealis GmbH, 1020 Vienna (AT)
(72) Inventor: LIU, YI, 4021 Linz (AT); DOU, Qizheng, 4021 Linz (AT); VELICHKO, Nikolaev Hristov, 4021 Linz (AT)
(74) Representative: Kador & Partner Part mbB

(57) **Abstract**

The present invention relates to a high density polyethylene composition, comprising (A) from 60 to 97 wt.-%, based on the total weight of the high density polyethylene composition, of a high density multimodal polyethylene copolymer having a polymer density of at least 950 kg/m³ and a MFR₅ determined according to ISO 1133 (190 °C, 5 kg) of not more than 0.50 g/10 min, and (B) from 3 to 40 wt.-%, based on the total weight of the high density polyethylene composition, of an ultra-high molecular weight polyethylene homopolymer having a nominal viscosity molecular weight Mv of 2,000,000 to 5,000,000 g/mol different from component (A); and wherein said high density multimodal polyethylene copolymer (A) comprises a copolymer of ethylene with at least one alpha olefin comonomer having from 4 to 12 carbon atoms, and said high density polyethylene composition has an MFR₂₁ of 3.0 g/10 min or less and a density of at least 958 kg/m³ including pigments, if present. The invention further relates to a process for the preparation of the above high density polyethylene composition and to an article, preferably a pipe or a pipe fitting comprising the high density polyethylene composition.

## Description

The present invention relates to a high-density polyethylene composition with improved mechanical performance balance, in particular a superior balance between short term and long term pressure performance and at the same time high homogeneity.

In particular, the present invention relates to a blend of a high density multimodal polyethylene copolymer and an ultra-high molecular weight polyethylene homopolymer.

The present invention further relates to a process for the preparation of the high density polyethylene composition and to articles, preferably pipes or pipe fittings comprising the high density polyethylene composition.

### Background

Pipes constructed from polymer materials have a multitude of uses, such as fluid transport, i.e. the transport of liquids or gases, e.g. water or natural gas. During transport, it is normal for the fluid to be pressurized. Moreover, the transported fluid may have varying temperatures, usually within the range from about 0°C to about 50°C. Such pressurized pipes are preferably constructed from polyolefins usually unimodal or bimodal polyethylene such as medium density polyethylene (MOPE; density: 0.930- 0.940 g/cm³) and high density polyethylene (HDPE; density: 0.940 - 0.970 g/cm³).

The expression "pressure pipe" used herein refers to a pipe which, when used, is subjected to a positive pressure, that is the pressure inside the pipe is higher than the pressure outside the pipe.

Such polyethylene compositions are typically multimodal in molecular weight distribution. The high molecular weight (HMW) component provides improved mechanical properties to the composition. When increasing the molecular weight of the component mechanical properties of the composition can be improved. Instead the low molecular weight (LMW) component provides good processability. Mixing high molecular weight components together with low molecular weight components may result in a loss of homogeneity, because the viscosity ratio between the high molecular weight components and the low molecular weight components is increasing. The loss of homogeneity may be detrimental to the mechanical properties of the articles.

Numerous polyethylene compositions for the production of pipes are known. Pipe materials are classified such as PE80 or PE100. The service temperature for PE100 is 20 °C. The ISO 9080 classification guarantees that a PE100 material will have a lifetime of at least 50 years at 20 °C using internal stress of 10 MPa.

Ultra-high molecular weight (UHMW) component have been used for blending with multimodal high density polyethylene (HDPE) to further improve the mechanical properties. According to ASTM D 4020-05, UHMWPE shows a relative viscosity of greater than 1.44 in decahydronaphthalene solution at a concentration of 0.02 % and at 135 °C, corresponding to a nominal viscosity molecular weight (Mv) of at least 3,100,000 g/mol. On the other hand, according to ISO 11542-1, polyethylene having an MFR₂₁, measured at 190 C and 21.6 kg load, of less than 0.1 g/10 min is defined as UHMWPE. The incorporation of UHMW polyethylene into a polyethylene composition as a copolymer is also known and is reported in, for example, WO 2007/042216, WO 96/18677 and WO 2006/092378. However, there are serious homogeneity problems due to the ultra-high molecular weight component. For example, Ogunniyi et al. (Journal of Applied Polymer Science, 2005, 97, 413-425) and Vadhar et al. (Journal of Applied Polymer Science, 1986, 32, 5575-5584) both report the need for long blending times of the order of 15 minutes in a batch mixer when the ultra-high molecular weight polyethylene was added to other polyethylenes.

The inclusion of UHMW polyethylene into HDPE via extrusion has also been investigated and has been carried out using a co-rotating twin screw extruder by Huang and Brown (Polymer, 1992, 10 33, 2989-2997). However, although the UHMW polyethylene particles were found to be well bonded in the matrix and this helped to slow down the rate of crack propagation, when analyzed under SEM, the UHMW polyethylene was found to remain in large separate domains with no evidence of "melting" into the HDPE matrix. For these reasons, the amount of UHMW polyethylene is limited to low loadings.

EP 3 418 330 A1 discloses a multimodal polymer composition comprising a base resin including at least three polymer components, which are a very high molecular weight polyethylene component as fraction A1, a low molecular weight polyethylene component as fraction A2 having a weight average molecular weight lower than a weight average molecular weight of the very high molecular weight polyethylene component, and a high molecular weight polyethylene component as fraction A3 having a weight average molecular weight higher than the weight average molecular weight of the low molecular weight polyethylene component, but lower than the weight average molecular weight of the very high molecular weight component. The multimodal polyethylene composition is produced in a multistage polymerization process in the presence of Ziegler-Natta catalyst.

WO 2013/060736 A1 discloses a high density polyethylene blend comprising (A) 55 to 95 wt.-% of a high density multimodal polyethylene copolymer component having a density of at least 940 kg/m³ , and (B) 5 to 45 wt.-% of an ultra-high molecular weight polyethylene homopolymer having an intrinsic viscosity of at least 6 dl/g and an MFR₂₁ of less than 0.5 g/10 min; and wherein said blend has an MFR₂₁ of 10.0 g/10 min or less and a density of at least 940 kg/m³. However, the UHMWPE example disclosed in this work has Mv of only up to 1,150,000. This prior art does not teach whether good homogeneity can be achieved with UHMWPE having even higher Mv for improvement in mechanical performance.

EP 3 037 436 A1 relates to a process for producing a multimodal polyethylene composition with an ultrahigh molecular weight fraction by melt-blending the ultra-high fraction in form of an in-situ polymerized master batch into a bimodal polyethylene composition prepared in a multi-stage polymerization process. The resultant multimodal polyethylene composition shows an improved homogeneity at a minimum degradation during melt-blending. However, though Mv of the UHMWPE component cannot be measured, the examples of the multimodal polyethylene compositions disclosed in this patent have a relatively high average molecular weight as reflected by their MFR₂₁ (down to 7.1 g/10min). So there could be still room for further improvement in molecular weight and mechanical performance.

Thus, it is an object of the present invention to provide a high density polyethylene composition with improved mechanical performance balance, in particular a superior balance between short term and long term pressure performance and at the same time high homogeneity. Especially, there is a desire to provide composition for pipe applications with improved hydrostatic pressure resistance, excellent impact strength and superior homogeneity (such as low gel levels or good white spot rating). At the same time, tensile modulus and/or strain hardening modulus should not decrease.

### Summary of the Invention

The above objects can be surprisingly achieved by a high density polyethylene composition, comprising
(A) from 60 to 97 wt.-%, based on the total weight of the high density polyethylene composition, of a high density multimodal polyethylene copolymer having a polymer density of at least 950 kg/m³ and a MFRs of 0.50 g/10 min or less, determined according to ISO 1133 (190 °C, 5 kg), and
(B) from 3 to 40 wt.-%, based on the total weight of the high density polyethylene composition, of an ultra-high molecular weight polyethylene homopolymer having a nominal viscosity molecular weight Mv, determined as described in the experimental part below, of 2,000,000 to 5,000,000 g/mol different from component (A); and
   wherein said high density multimodal polyethylene copolymer (A) comprises a copolymer of ethylene with at least one alpha olefin comonomer having from 4 to 12 carbon atoms, and
   said high density polyethylene composition has an MFR₂₁ of 3.0 g/10 min or less, determined according to ISO 1133 (190 °C, 21.6 kg), and a density of at least 958 kg/m³ including pigments, if present.

The term "including pigments, if present" indicates that pigments are optional in the final high density polyethylene composition of the invention and the density is measured based on the polymer density, if pigments are absent or on the density of the polymer including pigments, if these pigments are present.

The term "polymer density" refers to the density of the pure polymer without any pigments such as carbon black.

The above objects can be further achieved by a process for the preparation of the above high density polyethylene composition comprising the step of: extruding or kneading the high density multimodal polyethylene copolymer (A) and the ultra-high molecular weight polyethylene homopolymer (B) to form a blend.

The above objects can be further achieved by an article, preferably a pipe or a pipe fitting comprising the high density polyethylene composition of the invention or by the use of the high density polyethylene composition according to the invention for the production of an article, preferably a pipe or a pipe fitting.

### Detailed Description of the Invention

The present invention has surprisingly found that ultra-high molecular weight polyethylene can be melt-blended with a high density multimodal polyethylene copolymer in comparatively high proportions without compatibility problems and no or less deterioration of the mechanical performance of the blend, in particular superior balance between short term and long term pressure performance and at the same time high homogeneity. Thus, the above-defined invention has been achieved.

### (A) High density multimodal polyethylene copolymer (A)

The high density polyethylene composition according to the invention preferably comprises from 70 to 95 wt.-%, more preferably from 80 to 90 wt.-% of the high density multimodal polyethylene copolymer (A).

The term "multimodal" means herein, unless otherwise stated, multimodality with respect to molecular weight distribution and includes therefore a multimodal, such as a bimodal polymer. Usually, a polyethylene composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

It is particularly preferred that the high density multimodal polyethylene copolymer (A) comprises:
(a) a low molecular weight polyethylene (LMW) component having a weight average molecular weight lower than the weight average molecular weight of the ultra-high molecular weight polyethylene homopolymer (B), and
(b) a high molecular weight polyethylene (HMW) component having a weight average molecular weight higher than the weight average molecular weight of the low molecular weight polyethylene component (a), but lower than the weight average molecular weight of the ultra-high molecular weight polyethylene homopolymer (B).

Preferably, the LMW component (a) has a MFR₂ of at least 5 g/10 min, more preferably at least 30 g/10 min, even more preferably at least 70 g/10min.

Preferably, the density of the LMW component (a) may range from 950 to 980 kg/m³, e.g. 950 to 975 kg/m³.

The LMW component (a) may form from 30 to 70 wt.-%, e.g. 35 to65 wt.-% of the multimodal polymer with the HMW component (b) forming 70 to 30 wt.-%, e.g. 65 to 35 wt.-%. Typically, the LMW component forms 40 to 62 wt.-% and the HMW component forms 38 to 60 wt.-% of the blend forming the high density polyethylene composition of the invention.

Preferably, the high density multimodal polyethylene copolymer (A) has a polymer density of from 952 up to 960 kg/m³, more preferably of from 952.5 up to 958.0 kg/m³.

It is noted that the polymer density is the density of the pure polymer which encompasses only polymeric components and excludes any pigments, in particular carbon black. As these pigments increase the density of the polymer, the polymer density of a polymeric component clearly differs from the same polymeric component including any pigments.

The molecular weight expressed as Mw of component (A) may be at least 200,000 g/mol, such as at least 220,000 g/mol, preferably from 250,000 to 550,000 g/mol, more preferably from 300,000 to 500,000 g/mol.

The molecular weight distribution (or polydispersity, PD) expressed as Mw/Mn of component (A) may be at least 20, such as at least 25, preferably from 28 to 45, more preferably from 30 to 42.

The shearing viscosity at 0.05 rad/s expressed as Eta_{0.05} of component (A) may be at least 200,000 Pa.s, such as at least 300,000 Pa.s, preferably from 500,000 to 1,200,000 Pa.s, more preferably from 600,000 to 1,000,000 Pa.s.

The shearing thinning factor, namely Eta_{0.05}/Eta₃₀₀, expressed as STF of component (A) may be at least 250, such as at least 350, preferably from 400 to 1,000, more preferably from 450 to 800.

The high density multimodal polyethylene copolymer (A) comprises a copolymer of ethylene with at least one alpha-olefin comonomer having from 4 to 12 carbon atoms, wherein said alpha-olefin comonomer preferably is selected from 1-butene, 1-hexene , 4-methyl-1-pentene and 1-octene, more preferably from 1-butene and 1-hexene.

The high density multimodal polyethylene copolymer (A) preferably has a total content of comonomer units other than ethylene of from 0.01 to 0.50 mol%, more preferably of from 0.05 to 0.45 mol%, even more preferably of from 0.1 to 0.40 mol%:
For the preparation of the high density multimodal polyethylene copolymer (A) polymerization methods well known to the skilled person may be used. It is within the scope of the invention for a multimodal, e.g. at least bimodal, polymer to be produced by blending each of the components in-situ during the polymerization process thereof (so called in-situ process) or, alternatively, by blending mechanically two or more separately produced components in a manner known in the art.

The high density multimodal polyethylene copolymer (A) is preferably obtained by in-situ blending in a multistage polymerization process.

Accordingly, polymers are obtained by in-situ blending in a multistage, i.e. two or more stage, polymerization process including solution, slurry and gas phase process, in any order. Preferably, the multimodal polyethylene copolymer (A) used in the blend of the invention is produced at least in a two-stage polymerization using a single site catalyst or preferably a Ziegler Natta catalyst. Thus, for example two slurry reactors or two gas phase reactors, or any combinations thereof, in any order can be employed. Preferably however, the polyethylene is made using a slurry polymerization in one or more, preferably two loop reactor(s) followed by a gas phase polymerization in a gas phase reactor.

A loop reactor - gas phase reactor system is well known as Borealis technology, i.e. as a BORSTAR^{™} reactor system. Such a multistage process is disclosed e.g. in EP 517 868 A1 or WO 2010/054732 A1.

### (B) Ultra-high molecular weight polyethylene homopolymer

The high density polyethylene composition according to the invention further comprises 3 to 40 wt.-%, preferably from 4 to 30 wt.-% or from 4 to 20 wt.-%, more preferably from 4 to 15 wt.-% of an ultra-high molecular weight polyethylene homopolymer (B) (in the following also "UHMWPE). The ultra-high molecular weight polyethylene homopolymer (B) has a different molecular weight than component (A).

Component (B) has an intrinsic viscosity of from 12 to 40 dl/g, preferably of from 16 to 35 dl/g, more preferably from 17 to 30 dl/g, even more preferably of from 18 to 25 dl/g.

Component (B) has a nominal viscosity molecular weight Mv of from 2,000,000 to 5,000,000 g/mol, preferably of from 2,500,000 to 4,000,000 g/mol, more preferably from 2,950,000 to 3,750,000 g/mol, even more preferably of from 3,100,000 to 3,500,000 g/mol.

Intrinsic viscosity is measured according to DIN EN ISO 1628 (1998 ) in Decalin at 135 °C as described in the experimental part and the nominal viscosity molecular weight Mv is calculated from the intrinsic viscosity according to ASTM D 4020 - 05.

The shearing viscosity at 0.05 rad/s expressed as Eta_{0.05} of component (B) may be at least 600,000 Pa.s, such as at least 8,000,000 Pa.s, preferably from 12,000,000 to 25,000,000 Pa.s, more preferably from 14,000,000 to 20,000,000 Pa.s.

The shearing thinning factor, namely Eta_{0.05}/Eta₃₀₀, expressed as STF of component (B) may be at least 500, such as at least 800, preferably from 1,200 to 4,000, more preferably from 1,500 to 3,000.

The UHMW polyethylene of the invention is an ethylene homopolymer. The UHMW polyethylene of the invention can be prepared by conventional processes. Preferably, the UHMW polyethylene is prepared using a Ziegler-Natta catalyst.

This component preferably has a very low MFR, such as an MFR₂₁ of less than 0.5 g/10min, more preferably of less than 0.1 g/10min, even more preferably less than 0.05 g/10min.

### (C) High density polyethylene composition

The high density polyethylene composition according to the present invention comprises component (A) and (B) in the above-defined weight proportions. It thus comprises a relatively high proportion of the UHMWPE.

The high density polyethylene composition according to the invention has an MFR₂₁ of 3.0 g/10 min or less, preferably from 0.05 to 2.9 g/10 min, more preferably from 0.5 to 2.8 g/10 min.

The high density polyethylene composition according to the invention has a density of at least 958 kg/m³, preferably from 958 to 990 kg/m³, more preferably from 960 to 980 kg/m³, even more preferably from 962 to 974 kg/m³ including pigments. Thus, the density of the final high density polyethylene composition is determined with the optional inclusion of any pigment, such as carbon black.

The high density polyethylene composition according to the invention has a density of at least 946 kg/m³, preferably from 946 to 978 kg/m³, more preferably from 948 to 968 kg/m³, even more preferably from 950 to 962 kg/m³ without pigments. Thus, the density of the final high density polyethylene composition is determined without inclusion of any pigment, such as carbon black.

The high density polyethylene composition according to the invention preferably has a yield stress, determined according to ISO 527-2 (cross head speed 0.3 mm/min) at a temperature of 80 °C, of greater than 6.96 MPa, preferably in the range of from 6.97 to 8.00 MPa.

The high density polyethylene composition according to the invention preferably has a strain hardening modulus, determined according to ISO 18488 and as described in the experimental section below, of 80 MPa or higher, preferably in the range of from 85 to 150 MPa, more preferably of from 85 to 120 MPa. Strain hardening modulus is important for the lifetime of the pipe. Especially a high strain hardening modulus indicates that the slow crack growth resistance of the composition is very good.

The high density polyethylene composition according to the invention preferably has a white spot rating (WSR), determined according ISO 18 553/2002-03-01 and as described in the experimental section below, of not more than 12, preferably in the range of from 5 to 12

The white spot rating test is a measure for the homogeneity of a polyethylene composition. When compounding polyethylene compositions e.g. for producing pipes, so-called "white spots" occur in the compounded material. These white spots usually consist of non-pigmented, high molecular weight polymer agglomerates/particles that have not been adequately dispersed in the composition. These inhomogeneities in polymer compositions may increase roughness of the surface of articles produced thereof and impair their strength properties.

The high density polyethylene composition according to the invention preferably has a white spot area (WSA), determined according ISO 18 553/2002-03-01 and as described in the experimental section below, of not more than 10%, preferably in the range of from 2 to 8%.

The high density polyethylene composition according to the invention preferably has a shearing viscosity at 0.05 rad/s expressed as Eta_{0.05}, determined as described in the experimental part below, of at least 900,000 Pa.s, preferably at least 940,000 Pa.s, more preferably at least 950,000 Pa.s, such as from 970,000 to 1,600,000 Pa.s, or from 1,000,000 to 1,500,000 Pa.s.

The high density polyethylene composition according to the invention preferably has a shearing viscosity at 300 rad/s expressed as Eta₃₀₀, determined as described in the experimental part below, of at least 1,405 Pa.s, preferably at least 1,550 Pa.s, more preferably at least 1,600 Pa.s, such as from 1,610 to 2,500 Pa.s, or from 1,620 to 2,200 Pa.s.

The high density polyethylene composition according to the invention preferably has a viscosity at a shear stress of 747 Pa, expressed as Eta₇₄₇, determined as described in the experimental part below, of at least 8,000 kPa.s, preferably at least 8,600 kPa.s, more preferably at least 9,000 kPa.s, such as from 9,500 to 2,500 kPa, or from 10,000 to 22,000 kPa.s.

The high density polyethylene composition according to the invention may be prepared simply by mixing the components but to ensure homogeneity for maximum pipe performance it will be appreciated that the components have to be compounded. This can be achieved by any conventional method known to those skilled in the art, e.g. extrusion or kneading, preferably extrusion.

In the process according to the invention the high density multimodal polyethylene copolymer (A) is blended in a blending step, preferably mechanical blending step, with the ultra-high molecular weight polyethylene homopolymer (B) to form the high density polyethylene composition according to the invention.

Thereby, the high density multimodal polyethylene copolymer (A) and the ultra-high molecular weight polyethylene homopolymer (B) can be fed to the melt blending device as pellets or as powder. Preferably, the high density multimodal polyethylene copolymer (A) is introduced as pellets. It is further preferred to introduce the ultra-high molecular weight polyethylene homopolymer (B) as powder.

The present invention found that in contrast to conventional powder/powder melt mixing, the introduction of the high density multimodal polyethylene copolymer (A) as pellets using a first screw configuration (explained below) and then melt blending with powder of the ultra-high molecular weight polyethylene homopolymer (B) drastically improves homogeneity of the blend. Thus, the small particles of the powder of the ultra-high molecular weight polyethylene homopolymer (B) fill in the gaps between the pellets of the high density multimodal polyethylene copolymer (A). This increases the local contact points due to the larger surface-to-volume ratio of the powder leading to more effective heat transfer, viscous dissipation, faster melting and better melt homogenization.

The melt blending device can have more than one feeding zones. In this configuration a second feeding zone is preferably situated downstream of the first feeding zone. Preferably, both components (A) and (B) are introduced in the first feeding zone. Additives as defined below may be added to either one or both of the feeding zones. It is further preferred to dry-blend the components (A) and (B) and introduce said dry-blend via one feeding zone into the melt-blending device.

During dry-blending of the components (A) and (B) additives as defined below may additionally or alternatively be added.

Suitable melt blending devices are mixers or extruders. Especially suitable are twin screw extruders such as e.g. Coperion ZSK twin screw extruder.

According to a preferred embodiment of the invention the high density multimodal polyethylene copolymer (A) is first pelletized, and subsequently melt blended with the ultra-high molecular weight polyethylene homopolymer (B).

For pelletizing the compound (A), a co-rotating twin extruder, such as ZSK 18 or ZSK 40 can be used. Extrusion conditions will be familiar to the skilled person. Appropriate temperatures include from 150°C to 250°C, preferably 170 to 240°C, more preferably 190 to 235°C. Screw speeds of 80 to 200 rpm, preferably 100 to 180 rpm, such as 100 to 150 rpm are appropriate.

In the melt blending step, the ultra-high molecular weight polyethylene homopolymer (B) is preferably present in powdery form.

The use of extrusion to homogenize the compositions is preferred, in particular the use of a co-rotating twin extruder, such as ZSK 18 or ZSK 40. Extrusion conditions will be familiar to the skilled person. Appropriate temperatures include from 150°C to 250°C, preferably 170 to 240°C, more preferably 190 to 235°C. Screw speeds of 80 to 200 rpm, preferably 100 to 180 rpm, such as 100 to 150 rpm are appropriate. In general, slower throughput rates encourage homogeneity. Each extrusion step is preferably carried out under the same conditions.

It is further preferred that the pelletizing step is conducted with a first screw configuration having not more than 2 kneading blocks. The melt blending step may further preferably be conducted with a second screw configuration having at least 3 kneading blocks. The first screw configuration provides shorter residence time under shear and lower shear strain. than the second screw configuration so that the polymeric components are less degraded. On the other hand, the second screw configuration provides longer residence time under shear and higher shear strain than the first screw configuration so that a higher homogenization effect is obtained.

It will be appreciated that prior to forming the high density polyethylene composition according to the invention, the two polymer components of the invention may be blended with up to 10 wt.-%, preferably up to 8 wt.-%, more preferably up to 7 wt.-%, standard additives and adjuvants known in the art, based on the total weight of the high density polyethylene composition according to the invention. They may also contain additional polymers, such as carrier polymers of the additive masterbatches.

Suitable antioxidants and stabilizers are, for instance, sterically hindered phenols, phosphates or phosphonites, sulphur containing antioxidants, alkyl radical scavengers, aromatic amines, hindered amine stabilizers and the blends containing compounds from two or more of the above-mentioned groups. Examples of sterically hindered phenols are, among others, 2,6-di-tert-butyl-4-methyl phenol (sold, e.g., by Degussa under a trade name of lonol CP), pentaerythrityl-tetrakis(3-(3°,5"-di-tert. butyl-4-hydroxyphenyl)-propionate (sold, e.g., by Ciba Specialty Chemicals under the trade name of Irganox 1010) octadecyl-3,3(3',5'-di-tert-butyl-4'-hydroxyphenyl)-propionate (sold, e.g., by Ciba Specialty Chemicals under the trade name of Irganox 1076) and 2,5,7,8-tetramethyl-2(4',8',12'-trimethyltridecyl)-chroman-6-ol (sold, e.g., by BASF under the tradename of alpha-tocopherol).

Examples of phosphates and phosphonites are tris (2,4-di--butylphenyl) phosphite (sold, e.g., by Ciba Specialty Chemicals under the trade name of Irgafos 168), tetrakis-(2,4-di-tert.-butylphenyl)-4,4"-biphenylen-di-phosphonite (sold, e.g., by Ciba Specialty Chemicals under the trade name of Irgafos P-EPQ) and tris-(nonylphenyl)phosphate (sold, e.g., by Dover Chemical under the trade name of Doverphos HiPure 4).

Examples of sulphur-containing antioxidants are dilaurylthiodipropionate (sold, e.g., by Ciba Specialty Chemicals under the trade name of Irganox PS 800), and distearylthiodipropionate (sold, e.g., by Chemtura under the trade name of Lowinox DSTDB).

Examples of nitrogen-containing antioxidants are 4,4'-bis(1,1'- dimethylbenzyl)diphenylamine (sold, e.g., by Chemtura under the trade name of Naugard 445), polymer of 2,2,4-trimethyl-1,2-dihydroquinoline (sold, e.g., by Chemtura under the trade name of Naugard EL-17), p-(p-toluene-sulfonylamido)- diphenylamine (sold, e.g., by Chemtura under the trade name of Naugard SA) and **N,N'** -diphenyl-p-phenylene-diamine (sold, e.g., by Chemtura under the trade name of Naugard I).

Commercially available blends of antioxidants and process stabilizers are also available, such as Irganox B225, Irganox B215 and Irganox B561 marketed by Ciba-Specialty Chemicals. Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV screener. Preferably, carbon black is optionally used in an amount of from 0.5 to 5 wt.-%, more preferably from 1.0 to 3.5 wt.-%, even more preferably from 1.5 to 3.0 wt.-%, based on the total weight of the high density polyethylene composition according to the invention. Preferably, the carbon black is added as a masterbatch where it is premixed with a polymer, preferably high density polyethylene (HDPE), in a specific amount. Also titanium oxide may be used as an UV-screener. It is particularly preferred that carbon black is present in the high density polyethylene composition according to the invention.

### (D) Articles

The high density polyethylene composition according to the present invention is suitable for different applications such as steel pipe coating or high density (HD) pipe applications. Thus, the invention relates to articles, preferably a pipe or a pipe fitting comprising the high density polyethylene composition according to the present invention.

### Determination Methods

### a) Melt flow rate

The melt flow rate (MFR) is determined according to ISO 1133 and is indicated in g/10 min. The MFR is an indication of the melt viscosity of the polymer. The MFR is determined at 190 °C for polyethylene. The load under which the melt flow rate is determined is usually indicated as a subscript, for instance MFR₂ is measured under 2.16 kg load, MFRs is measured under 5 kg load or MFR₂₁ is measured under 21.6 kg load. The quantity FRR (flow rate ratio) is an indication of molecular weight distribution and denotes the ratio of flow rates at different loads. Thus, FRR_{21/5} denotes the value of MFR₂₁/MFR₅.

### b) Density

Density of the polymer was measured according to ISO 1183-1:2004 Method A on compression moulded specimen prepared according to EN ISO 1872-2 (Feb 2007) and is given in kg/m³.

### c) Quantification of comonomer content by NMR spectroscopy

### Quantitative nuclear-magnetic resonance (NMR) spectroscopy was used to quantify the comonomer content of the polymer.

Quantitative ¹³C{¹H} NMR spectra recorded in the molten-state using a Bruker Avance III 500 NMR spectrometer operating at 500.13 and 125.76 MHz for ¹H and ¹³C respectively. All spectra were recorded using a ¹³C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 16384 (16k) transients were acquired per spectra.

Quantitative ¹³C{¹H} NMR spectra were processed, integrated and relevant quantitative properties determined from the integrals. All chemical shifts are internally referenced to the bulk methylene signal (δ) at 30.00 ppm {randall89}.

Characteristic signals corresponding to the incorporation of 1-hexene were observed {randall89}. The amount of isolated 1-hexene incorporated in EEHEE sequences was quantified using the integral of the *B4 sites (I_{*B4}) at 38.3 ppm accounting for the number of reporting sites per comonomer: $H = {I}_{∗ B 4}$

Characteristic signals resulting from saturated end-groups were observed. The content of such saturated end-groups was quantified using the average of the integral of the signals at 22.8 ppm and 32.2 ppm assigned to the 2s (I_{2S}) and 3s (I_{3S}) sites respectively: $S = \left(1/2\right) * \left({I}_{2 S}+{I}_{3 S}\right)$

The amount of ethylene was quantified using the integral of the bulk methylene (I_{δ}) sites at 30.00 ppm. This integral included the *γ* site as well as the 3B4 sites from 1-hexene.

The total ethylene content was calculated based on the bulk integral and compensating for the observed 1-hexene sequence and end-group: $E = \left({I}_{δ}/2\right) + \left(3*H/2\right) - \left(H/2\right) + \left(3*S/2\right)$

The total mole fraction of 1-hexene in the polymer was then calculated as: $fH = H / \left(E+H\right)$

The mole percent comonomer incorporation was calculated from the mole fraction: $H \left[mol%\right] = 100 * fH$

The weight percent comonomer incorporation was calculated from the mole fraction: $H \left[wt%\right] = 100 * \left(fH*84.16\right) / \left(\left(fH*84.16\right)+\left(\left(1-fH\right)*28.05\right)\right)$
randall89
J. Randall, Macromol. Sci., Rev. Macromol. Chem. Phys. 1989, C29, 201.
klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.
filip05
Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373

### d) Molecular weight averages, molecular weight distribution (Mn, Mw, Mz, MWD)

Mw, Mn and MWD are measured by Gel Permeation Chromatography (GPC) according to the following method: Molecular weight averages (Mz, Mw and Mn), Molecular weight distribution (MWD) and its broadness, described by polydispersity index, PD = Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ ${M}_{w} = \frac{{\sum }_{i = 1}^{N} \left({A}_{i}\times {M}_{i}\right)}{{\sum }_{i = 1}^{N} {A}_{i}}$ ${M}_{z} = \frac{{\sum }_{i = 1}^{N} \left({A}_{i}\times {M}_{i}^{2}\right)}{{\sum }_{i = 1}^{N} \left({A}_{i}/{M}_{i}\right)}$

For a constant elution volume interval ΔVᵢ, where Aᵢ, and Mᵢ are the chromatographic peak slice area and polyolefin molecular weight (MW), respectively associated with the elution volume, Vᵢ, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants: ${K}_{PS} = 19 \times {10}^{- 3} mL / g , {α}_{PS} = 0.655$ ${K}_{PE} = 39 \times {10}^{- 3} mL / g , {α}_{PE} = 0.725$ ${K}_{PP} = 19 \times {10}^{- 3} mL / g , {α}_{PP} = 0.725$

A third order polynomial fit was used to fit the calibration data. All samples were prepared in the concentration range of 0.5 -1 mg/ml and dissolved at 160 °C for 3 hours under continuous gentle shaking.

### e) Nominal viscosity molecular weight (Mv)

Nominal viscosity molecular (Mv) is calculated from the intrinsic viscosity [η] (IV) according to ASTM D 4020 - 05$Mv = 5.37 \times {10}^{4} \times {\left[η\right]}^{1.37}$

### f) Intrinsic viscosity (IV) measurement

Intrinsic viscosity is measured according to DIN EN ISO 1628 (1998) in Decalin at 135 °C.

The reduced viscosity (also known as viscosity number), η_{red}, and intrinsic viscosity, [η], of polyethylenes and polypropylenes are determined according to the ISO 1628-3: "Determination of the viscosity of polymers in dilute solution using capillary viscometers".

Relative viscosities of a diluted polymer solution (~1mg/ml) and of a pure solvent (decahydronaphthalene) are determined in an automated capillary viscometer (Lauda PVS1) equipped with 4 Ubbelohde capillaries placed in a thermostatic bath filled with silicone oil. The bath temperature is maintained at 135 °C. Each measuring stand is equipped with electronics to control pump, valve function, time measurement, meniscus detection and has a magnetic stirrer. The sample is weighed out and directly placed into the capillary. The capillary is filled with the exact volume of solvent by use of an automatic pipette. The sample is dissolved with constant stirring until complete dissolution is achieved (typically within 60-90min).

The efflux time of the polymer solution as well as of the pure solvent are measured several times until three consecutive readings do not differ for more than 0.1s (standard deviation).

The relative viscosity of the polymer solution is determined as the ratio of averaged efflux times in seconds obtained for both, polymer solution and solvent: ${η}_{rel} = \frac{{t}_{solution} - {t}_{solvent}}{{t}_{solvent}} \left[dimensionless\right]$

Reduced viscosity ((η_{red}) is calculated using the equation: ${η}_{red} = \frac{{t}_{solution} - {t}_{solvent}}{{t}_{solvent} * C} \left[dl/g\right]$ where C is the polymer solution concentration at 135°C: $C = \frac{m}{Vγ}$,
and m is the polymer mass, V is the solvent volume, and γ is the ratio of solvent densities at 20°C and 135°C (γ=ρ₂₀/ρ₁₃₅=1.107).

The calculation of intrinsic viscosity [η] is performed by using the Schulz-Blaschke equation from the single concentration measurement: $η = \frac{{η}_{red}}{1 + K ⋅ C ⋅ {η}_{red}}$ where K is a coefficient depending on the polymer structure and concentration. For calculation of the approximate value for [η], K=0.27.

### g) Strain hardening modulus (SH modulus)

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, λ, is between 8 and 12.

The true strain, λ, is calculated from the length, I (mm), and the gauge length, l₀ (mm), as shown by Equation 1. $λ = \frac{l}{{l}_{0}} = 1 + \frac{Δl}{{l}_{0}}$ where Δl is the increase in the specimen length between the gauge marks, (mm). The true stress, σtrue (MPa), is calculated according to formula 2, assuming conservation of volume between the gauge marks: ${σ}_{true} = {σ}_{n} λ$ where σₙ is the engineering stress.

The Neo-Hookean constitutive model (Equation 3) is used to fit the true strain- true stress data from which <Gp> (MPa) for 8 < λ < 12 is calculated. ${σ}_{true} = \frac{\left〈Gp\right〉}{20} \left({λ}^{2}-\frac{1}{λ}\right) + C$ where C is a mathematical parameter of the constitutive model describing the yield stress extrapolated to λ = 0.

Initially five specimens were measured. If the variation coefficient of <Gp> was greater than 2,5 %, then two extra specimens were measured. In case straining of the test bar takes place in the clamps the test result is discarded.

The PE granules of materials were compression moulded in sheets of 0.30 mm thickness according to the press parameters as provided in ISO 1872-2, Table 2.

After compression moulding of the sheets, the sheets were annealed to remove any orientation or thermal history and maintain isotropic sheets. Annealing of the sheets was performed for 1 h in an oven at a temperature of (120 ± 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample has a large clamping area to prevent grip slip, dimensions given in Table 1.

**Table 1: Dimensions of Modified ISO 37:1994 Type 3**

| Dimension | | Size (mm) |
|---|---|---|
| L | start length between clamps | 30.0 +/- 0.5 |
| I0 | Gauge length | 12.5 +/- 0.1 |
| I1 | Prismatic length | 16.0 +/- 1.0 |
| I3 | Total length | 70 |
| R1 | Radius | 10.0 +/- 0.03 |
| R2 | Radius | 8.06 +/- 0.03 |
| b1 | Prismatic width | 4.0 +/- 0.01 |
| b2 | Clamp width | 20.0 +/- 1.0 |
| h | Thickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.

The following procedure is performed on a universal tensile testing machine having controlled temperature chamber and non-contact extensometer:
1. Condition the test specimens for at least 30 min in the temperature chamber at a temperature of (80 ± 1) °C prior to starting the test.
2. Clamp the test piece on the upper side.
3. Close the temperature chamber.
4. Close the lower clamp after reaching the temperature of (80 ± 1) °C.
5. Equilibrate the sample for 1 min between the clamps, before the load is applied and measurement starts.
6. Add a pre-load of 0.5 N at a speed of 5 mm/min.
7. Extend the test specimen along its major axis at a constant traverse speed (20 mm/min) until the sample breaks.

During the test, the load sustained by the specimen is measured with a load cell of 200 N. The elongation is measured with a non-contact extensometer.

### h) Yield stress at 80°C (0.3mm/min)

2 mm thick plaques were compression molded according to ISO 17855-2 and 5A specimens according to ISO 527-2 were milled from the plaques. The tensile stress at yield was determined according to ISO 527-1, a test speed of 0.3 mm/min, and a testing temperature of 80° C.

### i) Rheology parameters

The characterisation of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C for PE, applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by $\left(t\right) = {γ}_{0} sin \left(ωt\right)$

If the applied strain is within the linear viscoelastic regime, the resulting sinusoidal stress response can be given by $\left(t\right) = {σ}_{0} sin \left(ωt+δ\right)$ where
σ₀ and *γ*₀ are the stress and strain amplitudes, respectively
*ω* is the angular frequency
*δ* is the phase shift (loss angle between applied strain and stress response)
t is the time.

Dynamic test results are typically expressed by means of several different rheological functions, namely the shear storage modulus G', the shear loss modulus, G", the complex shear modulus, G*, the complex shear viscosity, η*, the dynamic shear viscosity, η ', the out-of-phase component of the complex shear viscosity η" and the loss tangent, tan δ which can be expressed as follows: $G ′ = \frac{{σ}_{0}}{{γ}_{0}} cos δ \left[Pa\right]$ $G " = \frac{{σ}_{0}}{{γ}_{0}} sin δ \left[Pa\right]$ $G * = G ′ + iG " \left[Pa\right]$ $η * = η ′ - iη " \left[Pa.s\right]$ $η ′ = \frac{G "}{ω} \left[Pa.s\right]$ $η " = \frac{G ′}{ω} \left[Pa.s\right]$

The values of storage modulus (G'), loss modulus (G"), complex modulus (G*) and complex viscosity ( η*) were obtained as a function of frequency (ω). Thereby, e.g. η*0.05rad/s (Eta* for (w=0.05 rad/s), or Eta_{0.05}) is used as abbreviation for the complex viscosity at the frequency of 0.05 rad/s; η*300rad/s (Eta* for (w=300 rad/s) or Eta₃₀₀), is used as abbreviation for the complex viscosity at the frequency of 300 rad/s.

The determination of so-called Shear Thinning Factor (STF) is done, as described in equation 9. $STF = \frac{Eta * for \left(ω=0.05 rad/s\right)}{Eta * for \left(ω=300 rad/s\right)}$

The polydispersity index, PI, is defined by equation 11. $PI = \frac{{10}^{5}}{G ′ \left({ω}_{COP}\right)} , {ω}_{COP} = ω for \left(G′=G"\right)$ where ω_{COP} is the cross-over angular frequency, determined as the angular frequency for which the storage modulus, G', equals the loss modulus, G".

These tests were done on compression moulded discs.

### j) Rheological parameter Eta₇₄₇

One method which correlates well with the sagging properties and is used in connection with the present invention relates to the rheology of the polymer and is based on determination of the viscosity of the polymer at a very low, constant shear stress. A shear stress of 747 Pa has been selected for this method. The viscosity of the polymer at this shear stress, i.e., Eta₇₄₇, is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

### k) Measure of homogeneity/ White spot rating (WSR) and white spot area (WSA)

Measurements have been performed according to ISO 18553 to determine white spot rating and white spot area. Slices with thickness of approx. 15 µm were microtomed from six pellets with a Leica Histocore NANOCUT R and fixed to glass slides. These were examined with a Microscope Olympus BX51 in transmission light, with magnification of 100x, collecting and stiching together images from each whole section. Particles were automatically detected by the Olympus software Particle Inspector on each section. For white spot rating (WSR), classes to provide the final grade were taken from ISO 18553 (e.g., grade 1 being either 1 particle with diameter of 11-20 µm or 3 particles with diameter 5-10 µm). The final grading result is the average of the six single measurements (slices).

The rating scheme given in ISO 18553/2002-03-01 ends at a white spot rating value of 7.0. For higher ratings an internal extrapolation of said rating scheme was used as listed in the table below:

### Extrapolation of rating scheme given in ISO18553/2002-03-01

| **Grade** | **Dimensions (µm)** | | | | | | | | | | | | | | | |
|---|---|---|---|---|---|---|---|---|---|---|---|---|---|---|---|---|
| | 101-110 | 111-120 | 121-130 | 131-140 | 141-150 | 151-160 | 161-170 | 171-180 | 181-190 | 191-200 | 201-210 | 211-220 | 221-230 | 231-240 | 241-250 | 251-260 |
| | **Maximum number of particles and agglomerates** | | | | | | | | | | | | | | | |
| 7.0 | 12 | 6 | 3 | 1 | | | | | | | | | | | | |
| 7.5 | | 12 | 6 | 3 | 1 | | | | | | | | | | | |
| 8.0 | | | 12 | 6 | 3 | 1 | | | | | | | | | | |
| 8.5 | | | | 12 | 6 | 3 | 1 | | | | | | | | | |
| 9.0 | | | | | 12 | 6 | 3 | 1 | | | | | | | | |
| 9.5 | | | | | | 12 | 6 | 3 | 1 | | | | | | | |
| 10.0 | | | | | | | 12 | 6 | 3 | 1 | | | | | | |
| 10.5 | | | | | | | | 12 | 6 | 3 | 1 | | | | | |
| 11.0 | | | | | | | | | 12 | 6 | 3 | 1 | | | | |
| 11.5 | | | | | | | | | | 12 | 6 | 3 | 1 | | | |
| 12.0 | | | | | | | | | | | 12 | 6 | 3 | 1 | | |
| 12.5 | | | | | | | | | | | | 12 | 6 | 3 | 1 | |
| 13.0 | | | | | | | | | | | | | 12 | 6 | 3 | 1 |

This table is cut at white spot ratings of 17.0 as obtained in the example section but can further be extrapolated accordingly for higher white spot ratings.

### I) Tensile properties

The tensile properties including tensile modulus (23°C) and yield stress (23°C) were determined acc. ISO 527-2 method B on 1A ISO 527-2 dogbones. Following the standard, a testspeed of 1mm/min was used for tensile modulus and 50mm/min for all other properties. The testing temperature was 23±2° C. For specimen preparation, compression moulding was carried out according to ISO 17855-2.

### m) Charpy notched impact strength (Charpy NIS)

Charpy notched impact strength (23°C) was determined according to ISO 179-1/1eA on notched specimen of 80 mm ×10 mm × 4 mm (specimen according to ISO 179-1/1eA). Testing temperature was 23±2° C. For specimen preparation, compression moulding was carried out according to ISO 17855-2.

### Examples

### Preparation of the catalyst

For polymerization of the high density multimodal polyethylene copolymer (A) a Ziegler-Natta catalyst prepared according to WO2017/207493 A1 was used.

### Preparation of the high density multimodal polyethylene copolymer (A)

Polymerization was conducted under the following conditions in a Borstar^{®} pilot plant with a 3-reactor set-up (loop1 - loop2 - GPR) including a prepolymerization loop reactor.

| **Prepol** | |
|---|---|
| Cocatalyst feed (g/h) | 5.32 |
| Propane feed (kg/h) | 53.37 |
| Cocatalyst type | TEAL |
| Temperature (°C) | 50 |
| Pressure (kPa) | 5691.97 |
| Al/Ti ratio (mol/mol) | 14.98 |
| Catalyst feed (g/h) | 5.9 |
| Ethylene feed (kg/h) | 4 |
| Hydrogen feed (kg/h) | 0.005 |
| Split (%) | 2.63 |

| **Loop 1** | |
|---|---|
| Temperature (°C) | 95 |
| Pressure (kPa) | 5447.95 |
| H2/C2 ratio (mol/kmol) | 486.2 |
| Ethylene concentration (mol) | 1.19 |
| Hydrogen feed (kg/h) | 0.03 |
| MFR₂ value (g/10min) | 37 |
| Split (%) | 18.68 |

| **Loop 2** | |
|---|---|
| Temperature (°C) | 94.99 |
| Pressure (kPa) | 5277.32 |
| H2/C2 ratio (mol/kmol) | 414.06 |
| Ethylene concentration (mol%) | 3.01 |
| Ethylene feed (kg/h) | 40.67 |
| Hydrogen feed (kg/h) | 0.11 |
| MFR₂ value (g/10min) | 106 |
| Split (%) | 38.78 |

| **GPR** | |
|---|---|
| Temperature (°C) | 84.98 |
| Pressure (kPa) | 2000.14 |
| Hydrogen feed (kg/h) | 0 |
| H2/C2 ratio (mol/kmol) | 1.01 |
| C6/C2 ratio (mol/kmol) | 29.93 |
| Production rate | 39.05 |
| Ethylene concentration (mol%) | 18.6 |
| Density (kg/m³) | 952.4 |
| MFRs (g/10min) | 0.04 |
| MFR₂₁ (g/10min) | 3.81 |
| Split (%) | 39.91 |

| **HDPE powder (polyethylene base resin)** | |
|---|---|
| Density (kg/m³) | 953.2 |
| MFRs (g/10min) | 0.06 |
| MFR₂₁ (g/10min) | 4.92 |

Component (A) was pelletized by extrusion with 0.22 wt.-% Irganox B225 and 0.15 wt.-% Ca-stearate based on the final composition. Extrusion was carried out on a co-rotating twin screw extruder ZSK-18MC with a screw having two kneading blocks, at a temperature of 230°C in different barrels and at a screw speed of 120 rpm. Throughput rate was 2 kg/h.

The resulting pellets had a MFR₅ of 0.02 g/10min.

### Preparation of the ultra-high molecular weight polyethylene homopolymer (B)

### Polymerization

Unimodal slurry polymerisation was carried out in a 5.3 L bench scale reactor and can be described as follows:
The reactor was operated with the SIEMENS SIMATIC BATCH process control system using WIN CC as process flow display software. The catalyst was prepared as described herein. All catalyst and co-catalyst components were stored in a glovebox. Special designed metal tubes with Swagelok quick connects have been used to inject the catalyst in the reactor.

Into the stirred 5.3 litre batch reactor maintained at a temperature of 23°C, 850 g propane diluent was introduced and catalyst together with triethylaluminium (TEAL) as a cocatalyst was introduced with the ratio of Al/Ti of 15.

For prepolymerization, 30.3 g C2 and 8 g C6 were feed into reactor. The temperature of the reactor was raised to 60°C and the pressure was kept using C2 flow until 10 g monomer was consumed.

After flush, 850 g propane was fed into the reactor and the reactor was heated up to 60°C. C2 was introduced into reactor to reach pressure of 22.1 bar and the pressure was kept using C2 flow until 430-500 g monomer was consumed. The polymerization was interrupted by venting the hydrocarbons from the reactor. No hydrogen was added during polymerization.

Five batches of UHMWPE powder were prepared according to the above procedure, dry blended and moisturized with acetone. Then the power blend was mixed with an acetone solution that contains 0.3 wt.-% antioxidant mixture of Irgafos 165 and Irganox 1010 (Irgafos 165: Irganox 1010 = 2:1). After evaporation of the solvent (60°C in a circulating air oven) and being dried over night at 90°C in a vacuum oven, the powder was cooled down to room temperature for further experiments.

The so prepared blend of UHMWPE powder has the following properties

| | | **UHMWPE powder blend** |
|---|---|---|
| **Eta_{0.05}** | Pa.s | 16,039,374 |
| **Eta₃₀₀** | Pa.s | 6,113 |
| **STF (Eta_{0.05}/Eta₃₀₀)** | | 2,623.81 |
| **IV** | dl/g | 19.84 |
| **Mv** | kg/mol | 3,200 |

### Preparation of high density polyethylene compositions of Inventive examples 1 to 4 (IE 1-4) and Comparative examples 1 and 2 (CE 1-2)

All compositions of IE1-4 and CE 1-2 were prepared by extrusion with 0.22 wt% Irganox B225, 0.15wt% Ca-stearate and 5.75 wt% of carbon black masterbatch, based on the final composition. Extrusion was carried out on a co-rotating twin screw extruder ZSK-18MC with a homogenization screw, at a temperature from 200 to 230°C in different barrels and at a screw speed of 120 rpm. Throughput rate was 1 kg/h.

In preparing CE1, IE1, IE2 the powder of component (A) was used when compounding with component (B); whereas in preparing CE2, IE3, IE4 the pellet of component (A) was used when compounding with component (B).

For addition of carbon black a masterbatch containing 39.5 wt.% carbon black (Elftex TP, distributed by Cabot), 0.1 wt.% Irganox 1010 (from Ciba, now part of BASF) and 60.4 wt.% ethylene-butylene copolymer having an MFR₂ (2.16 kg, 190°C, ISO 1133) of 30 g/10 min and a density of 959 kg/m³ was used.

**Table 1**

| | | **CE1** | **IE1** | **IE2** |
|---|---|---|---|---|
| UHMWPE | wt.-% | 0 | 5 | 10 |
| MFR₅ | g/10min | 0.02 | 0.01 | 0.14 |
| MFR₂₁ density (incl. pigments) | g/10min | 3.06 | 1.41 | 0.66 |
| | kg/m³ | 965.8 | 964.8 | 964.7 |
| SH modulus | MPa | 89.9 | 87.19 | 86.34 |
| Yield stress at 80°C (0.3mm/min) | MPa | 6.96 | 7.15 | 7.43 |
| Tensile modulus (23°C) | MPa | 1271 | 1262 | 1246 |
| Yield stress (23°C) | MPa | 27.91 | 27.74 | 27.73 |
| Charpy NIS (23°C) | kJ/m² | 49.49 | 57.15 | 74.8 |
| WSR | | 4.92 | 9 | 11.75 |
| WSA | % | 3 | 5 | 7 |
| ω_{COP} | rad/s | 0.01 | | |
| PI | Pa⁻¹ | 7.09 | | |
| Eta_{0.05} | Pa.s | 782,142 | 1,016,464 | 1,207,715 |
| Eta₃₀₀ | Pa.s | 1,413 | 1,652 | 1,837 |
| Eta₇₄₇ | kPa.s | 7,365 | | |
| Mn | | 8,640 | 9,185 | 9,220 |
| Mw | | 316,000 | 381,000 | 377,500 |
| Mz | | 1,610,000 | 1,820,000 | 1,710,000 |
| PD | | 36.58 | 41.46 | 40.96 |
| NMR C6 content | mol% | 0.25 | 0.27 | 0.27 |

**Table 2**

| | | **CE2** | **IE3** | **IE4** |
|---|---|---|---|---|
| UHMWPE | wt.-% | 0 | 5 | 10 |
| MFR₅ | g/10min | 0.02 | 0.02 | 0.01 |
| MFR₂₁ | g/10min | 2.7 | 2.72 | 1.1 |
| density | kg/m³ | 965.5 | 964.5 | 964.2 |
| SH modulus | MPa | 99.93 | 100.87 | 97.12 |
| Yield stress at 80°C (0.3mm/min) | MPa | 6.91 | 6.98 | 7.18 |
| Tensile modulus (23°C) | MPa | 1231 | 1235 | 1239 |
| Yield stress (23°C) | MPa | 27.35 | 27.32 | 27.29 |
| Charpy NIS (23°C) | kJ/m² | 51.52 | 60.08 | 70.94 |
| WSR | | 6.75 | 8.08 | 9.67 |
| WSA | % | 1 | 3 | 6 |
| ω_{COP} | rad/s | 0.02 | 0.02 | |
| PI | Pa⁻¹ | 5.05 | 4.43 | |
| Eta0.05 | Pa.s | 929,385 | 1,042,179 | 1,273,778 |
| Eta300 | Pa.s | 1,501 | 1,662 | 1,909 |
| Eta747 | kPa.s | 8,548 | 11,309 | 16,012 |
| Mn | | 9,990 | 10,150 | 10,600 |
| Mw | | 396,000 | 400,500 | 424,500 |
| Mz | | 2,025,000 | 1,950,000 | 2,050,000 |
| PD | | 39.58 | 39.53 | 40.11 |
| NMR C6 content | mol% | 0.25 | 0.25 | 0.24 |

Thus, a comparison of IE1 and IE2 with CE1 in Table 1 above shows that the addition of ultra-high molecular weight polyethylene homopolymer (B) to the multimodal high density polyethylene base resin (A) provides a superior high density polyethylene composition with improved mechanical performance balance, i.e., increased yield stress at 80°C, thus indicating improvement in hydrostatic pressure resistance of the ductile failure region, while keeping the strain hardening modulus constant, indicating that the slow crack growth resistance is excellent.

A comparison of IE3 and IE4 with CE2 in Table 2 above shows that in contrast to conventional powder/powder melt mixing, surprising advantages can be achieved when first pelletizing the multimodal high density polyethylene base resin (A) and then melt blending it with powder of the ultra-high molecular weight polyethylene homopolymer (B). Thus, the blends of IE3 and IE4 prepared via pellet/powder mixing have lower white spot rating/white spot area, higher strain hardening modulus and higher Mw , but marginally lower yield stress at 80°C than the blends of IE1 and IE2 prepared via powder/powder mixing. Thus, the blends of IE3 and IE4 are further improved in homogeneity, slow crack growth resistance and still have hydrostatic pressure resistance comparable to/higher than CE1/CE2.

## Claims

1. A high density polyethylene composition comprising
(A) from 60 to 97 wt.-%, based on the total weight of the high density polyethylene composition, of a high density multimodal polyethylene copolymer having a polymer density of at least 950 kg/m³ and a MFRs of 0.50 g/10 min. or less, determined according to ISO 1133 (190 °C, 5 kg), and
(B) from 3 to 40 wt.-%, based on the total weight of the high density polyethylene composition, of an ultra-high molecular weight polyethylene homopolymer having a nominal viscosity molecular weight Mv of 2,000,000 to 5,000,000 g/mol different from component (A); and
wherein said high density multimodal polyethylene copolymer (A) comprises a copolymer of ethylene with at least one alpha olefin comonomer having from 4 to 12 carbon atoms and
said high density polyethylene composition has an MFR₂₁ of 3.0 g/10 min or less, determined according to ISO 1133 (190 °C, 21.6 kg), a density of at least 946 kg/m³ without pigments and a density of at least 958 kg/m³ including pigments, if present.

2. The high density polyethylene composition according to claim 1. wherein the high density multimodal polyethylene copolymer (A) comprises
(a) a low molecular weight polyethylene component having a weight average molecular weight lower than a weight average molecular weight of the ultra-high molecular weight polyethylene homopolymer (B), and
(b) a high molecular weight polyethylene component having a weight average molecular weight higher than a weight average molecular weight of the low molecular weight polyethylene component (a). but lower than the weight average molecular weight of the ultra-high molecular weight polyethylene homopolymer (B).

3. The high density polyethylene composition according to claim 1 or 2. wherein the high density multimodal polyethylene copolymer (A) has a polymer density of from 952 up to 960 kg/m³.

4. The high density polyethylene composition according to any one of the preceding claims. wherein the high density multimodal polyethylene copolymer (A) comprises an alpha olefin comonomer selected from the group consisting of 1-butene, 1-hexene, 4-methyl-1-pentene and 1-octene.

5. The high density polyethylene composition according to any one of the preceding claims. wherein the high density multimodal polyethylene copolymer (A) has a total content of comonomer units other than ethylene of from 0.01 to 0.50 mol%, determined by NMR as described herein.

6. The high density polyethylene composition according to any one of the preceding claims having a yield stress, determined according to ISO 527-2 (cross head speed 0.3 mm/min) at a temperature of 80 °C, of greater than 6.96 MPa.

7. The high density polyethylene composition according to any one of the preceding claims having a strain hardening modulus, determined according to ISO 18488 and as described herein, of 80 MPa or higher.

8. The high density polyethylene composition according to any one of the preceding claims having a white spot rating (WSR), determined according ISO 18 553/2002-03-01 and as described herein, of not more than 12.

9. A process for the preparation of a high density polyethylene composition according to any one of the preceding claims comprising the step of:
extruding or kneading the high density multimodal polyethylene copolymer (A) and the ultra-high molecular weight polyethylene homopolymer (B) to form a blend.

10. The process according to claim 9. wherein the high density multimodal polyethylene copolymer (A) is first pelletized. and
subsequently melt blended with the ultra-high molecular weight polyethylene homopolymer (B).

11. The process according to claim 10. wherein in the melt blending step the ultra-high molecular weight polyethylene homopolymer (B) is present in powdery form.

12. The process according to claim 10 or 11. wherein the pelletizing step is conducted with a screw configuration having not more than 2 kneading blocks.

13. The process according to any one of claims 10 to 12. wherein the melt blending step is conducted in a with a homogenization screw configuration having at least 3 kneading blocks.

14. An article. preferably a pipe or a pipe fitting comprising the high density polyethylene composition according to any one of claims 1 to 8.

15. Use of the high density polyethylene composition according to any one of claims 1 to 8 for the production of an article. preferably a pipe or a pipe fitting.
